(19)

Europäisches
Patentamt
European
Patent Office
Office européen
des brevets

(11) **EP 2 291 001 A1**

(12) **EUROPEAN PATENT APPLICATION**
published in accordance with Art. 153(4) EPC

(43) Date of publication:
**02.03.2011 Bulletin 2011/09**

(21) Application number: **09769905.2**

(22) Date of filing: **24.06.2009**

(51) Int Cl.:
*H04R 1/40* (2006.01)     *B60R 1/04* (2006.01)
*B60R 11/02* (2006.01)     *B60R 11/04* (2006.01)
*H04R 3/00* (2006.01)

(86) International application number:
**PCT/JP2009/002900**

(87) International publication number:
**WO 2009/157195 (30.12.2009 Gazette 2009/53)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **24.06.2008 JP 2008164297**

(71) Applicant: **Panasonic Corporation
Kadoma-shi
Osaka 571-8501 (JP)**

(72) Inventor: **OHTSUKA Yoshio
Osaka-shi, Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **MICROPHONE DEVICE**

(57)   The present invention provides a microphone device in which the directivity of the microphone is automatically adjustable depending on the position of the head of the speaker. The microphone device 201 mounted on a vehicle, includes a plurality of sound pickup units 203, 204 which generate an input signal depending on changes in an acoustic pressure caused by a sound wave; a position detecting unit 202 which detects a position of a head of a predetermined occupant in the vehicle; and an arithmetic processing unit 209 which performs a predetermined directive arithmetic process for the input signal based on the position of the head detected by the position detecting unit 202 and positions of the sound pickup units 203, 204.

FIG.2

# Description

## Technical field

The present invention relates to a microphone device mounted on a vehicle whose object is a directive sound pickup of a voice of a speaker in the vehicle.

## Related Art

As a microphone device of a related art, for example, there has been a microphone device shown in Patent Literature 1. With reference to Fig. 1, this one is explained. The microphone device of the related art is a microphone assembly 101 which includes a directive microphone 103 having directivity and a rotational board 102 on which the directive microphone 103 is disposed, disposes the rotational board 102, and electrically and mechanically connects the rotational board 102 to a vehicle. An arrow 104 is a direction in which the sensitivity of the directional microphone 103 is maximum, that is the directivity direction 104. The directivity direction 104 rotates by a rotation of the rotation board 102. The rotation board 102 makes it possible to aimingly pickup a voice of a speaker by rotatively adjusting the directivity direction 104 to a direction toward the speaker in order to rotatively adjust the directivity of the microphone in an arbitrary direction.

## Citation List

## Patent Literature

Patent Literature 1: JP-A-2007-168686

## Summary of Invention

## Technical Problem

However, in the above described structure of the related art, in a case where a position of a head of a speaker which is a sound source of the voice of speaker is different due to, for example, differences in physical frames such as seating height or inseam, it takes time to rotatively adjust the rotation board 102 because the directivity direction 104 has to be adjusted in the best direction.

The present invention addresses above described circumstance and the object of which is to provide a microphone device whose directivity is automatically adjustable according to a position of a head of an occupant in a vehicle.

## Solution to Problems

The microphone device of the present invention is a microphone device mounted on a vehicle, which includes a plurality of sound pickup units which generate an input signal depending on changes in an acoustic pressure caused by a sound wave, a position detecting unit which detects a position of a head of a predetermined occupant in the vehicle, and an arithmetic processing unit which performs a predetermined a directive arithmetic process for the input signal based on the position of the head detected by the position detecting unit and positions of the sound pickup units.

According to this configuration, it is possible to automatically adjust the directivity of the microphone by considering the positional relation between the position of the sound pickup unit which is a microphone and the position of the head of the occupant.

Also, in the microphone device of the present invention, the arithmetic processing unit further includes a signal delaying unit which determines a delay based on the position of the head detected by the position detecting unit and the position of the plurality of sound pickup units and delays a first input signal generated from the first sound pickup unit by the delay, and an arithmetic unit which performs a predetermined add-subtract process for a delayed first signal by the signal delaying unit and a second input signal generated from the second sound pickup unit other than the first sound pickup unit.

According to this configuration, it is possible to automatically adjust the directivity of the microphone by determining the delay for the first input signal and performing the directive arithmetic process based on the delay in consideration of the position of the sound pickup unit which is a microphone and the position of the head of the occupant.

Also, in the microphone device of the present invention, the position detecting unit detects the position of the head based on a setup angle of a back mirror provided on the vehicle.

According to this configuration, it is possible to automatically adjust the directivity of the microphone by detecting the position of the head based on the setup angle of the back mirror and considering the relation between the position of the sound pickup unit which is a microphone and the position of the head.

Also, in the microphone device of the present invention, the position detecting unit detects the position of the head based on a setup position of a seat provided in the vehicle.

According to this configuration, it is possible to automatically adjust the directivity of the microphone by detecting the position of the head of the occupant who sits down on the seat based on the setup position of the seat and considering the relation between the position of the sound pickup unit which is a microphone and the position of the head.

Also, in the microphone device of the present invention, the position detecting unit detects the position of the head based on a shot image which is shot by an imaging unit provided in the vehicle.

According to this configuration, it is possible to automatically adjust the directivity of the microphone by shooting the image including the occupant by the imaging unit, detecting the position of the head based on the shot image, and considering the relation between the position of the sound pickup unit which is a microphone and the position of the head.

Also, in the microphone device of the present invention, the position detecting unit detects the position of the head at least two of a setup angle of a back mirror which is provided in the vehicle, a setup position of a seat which is provided in the vehicle, and a shot image which is shot by an imaging unit provided in the vehicle.

According to this configuration, it is possible to more suitably adjust the directivity of the microphone since the precision of the detection is improved by detecting the position of the head of the occupant based on at least more than two of the setup angle of the back mirror, the setup position of the seat, and the shot image shot by the imaging unit.

Also, in the microphone device of the present invention, the sound pickup unit is a directive microphone.

According to this configuration, it is possible to more suitably adjust the directivity of the microphone.

Also, in the microphone device of the present invention, the sound pickup unit is a MEMS microphone.

According to this configuration, the microphone device can be miniaturized.

Also, in the microphone device of the present invention, the predetermined occupant includes an occupant in a driver seat and an occupant in a passenger seat.

According to this configuration, it is possible to automatically adjust the directivity of the microphone by detecting the both positions of the head of the occupant in the driver seat and the occupant in the passenger seat. Same thing is true for an occupant seated in a backseat.

## Advantageous Effects of the Invention

According to the present invention, it is possible to provide such a facility to direct the directivity toward the occupant by setting the back mirror in a suitable angle without adjustively changing the direction of the microphone after each positional change of the head of the occupant in the vehicle due to, for example, differences in a physical frame.

## Brief Description of Drawings

Fig.1: A conceptual view of a related microphone device.
Fig.2: A block diagram showing an example of a configuration of a microphone device according to an embodiment of the present invention.
Fig.3: A figure showing a principle to detect a position of a head of a speaker by using a detector for setup position and angle of a back mirror.

## Description of Embodiments

Bellows are explanations for embodiments of the present invention in reference to the drawings.

A microphone device of the embodiment of the present invention is characterized by a usage of a position detector for detecting a position of a head of a speaker in a vehicle (a predetermined occupant in some occupants).

The microphone device of the embodiment of the present invention is such a microphone device mounted in a vehicle that is, for example, provided on a ceiling or disposed in a vehicle after carried on from outside of the vehicle.

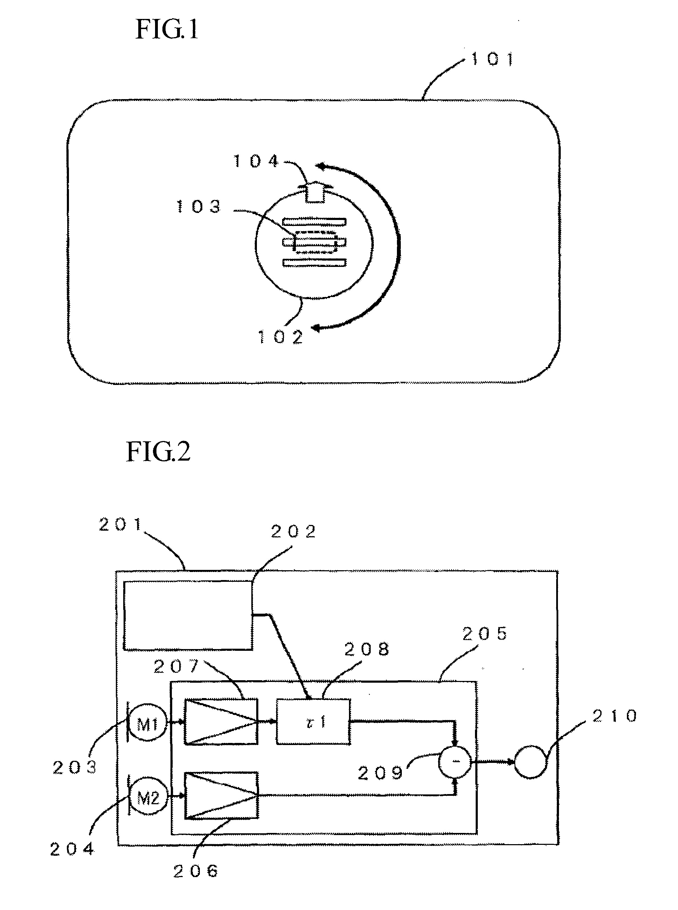

Fig. 2 is a drawing showing an example of the microphone device using a position detector in the embodiment of the present invention. The microphone device 201 shown in Fig. 2 includes a position detector 202, sound pickup elements 203 and 204, a signal processing unit 205, and an output unit 210.

Also, the signal processing unit 205 includes microphone amplifiers 206 and 207, a delay unit 208, and an arithmetic unit 209. The signal processing unit 205 is a signal processing unit into which an output signal of the sound pickup element 203, an output signal of the sound pickup element 204, and an output signal of the position detector 202 are input, and from which an output signal of the arithmetic unit 209 is output.

The sound pickup element 203 and the sound pickup element 204 are sound pickup elements which output an electrical signal depending on changes in an acoustic pressure caused by a sound wave. Although two sound pickup elements are shown in Fig. 2, the number of the sound pickup element is not necessarily two if it is plural. Also, the sound pickup element may be a directive microphone. Also, the sound pickup element may be a MEMS microphone.

The microphone amplifier 206 amplifies and output an electrical signal which drives the sound pickup element 204 and is output from the sound pickup element 204.

The microphone amplifier 207 amplifies and output an electrical signal which drives the sound pickup element 203 and is output from the sound pickup element 203.

The position detector 202 is a position detector which detects a position of a head of a speaker in the vehicle based on predetermined positional information and outputs an electric signal depending on the detected position of the head. For example, as the predetermined positional information, a setup angle of the back mirror is detected. In other words, the position detector 202 has a function as a detector for detecting the setup angle of the back mirror. Also, as the predetermined positional information, a setup position of a seat provided in the vehicle may be detected. In other words, the position detector 202 has a function as a detector for detecting the setup position of the seat. Also, the position detector 202 may obtain a shot image by an imaging unit provided in the vehicle as the predetermined positional information, and detect a position of a face of the speaker based on the shot image, and output an electrical signal depending on the detected position of the face. In other words, the position detector 202 has a function as a detector for detecting the position of the face in the shot image. Also, in this embodiment, the meaning of the phrase of "a head of the speaker" includes "a face of the speaker."

Also, the position detector 202 may not have only one of the above described functions as a detector but have a combination thereof. For the virtue of the combination, a precision of the position detection is improved.

The delay unit 208 is a delay unit which outputs an electrical signal from the microphone amplifier 207 with a delay depending on the output signal of the position detector 202.

The arithmetic unit 209 performs an arithmetic process such as addition and subtraction between the electric signal output from the delay unit 208 and the electric signal output from the microphone amplifier 206.

The output unit 210 is an output unit for connecting the electric signal output from the arithmetic unit 209 to an external device.

By the way, it is known that a sensitivity of an array microphone configured by a plurality of sound pickup elements each of which is disposed at a predetermined position is imparted a directivity by performing suitable delay and addition-subtraction to output of each sound pickup element in reference to differences in acoustic paths from a sound source to each sound pickup element. Thus, a process to perform suitable delay and addition-subtraction are referred to as a directive arithmetic process. It is generally known that there is a mathematical relation (1) between the directivity direction θ of the addition-subtraction type microphone array configured from two sound pickup elements and the amount of delay τ given to the sound pickup element. The microphone device 201 is a one using the principle of the adding-subtraction type microphone array.

$$\tau = \mathrm{d}\cos\theta\,/\,\mathrm{c} \quad \cdots (1)$$

, where τ is the delay, d is the distance between two sound pickup elements, θ is the directivity direction, and c is the acoustic velocity.

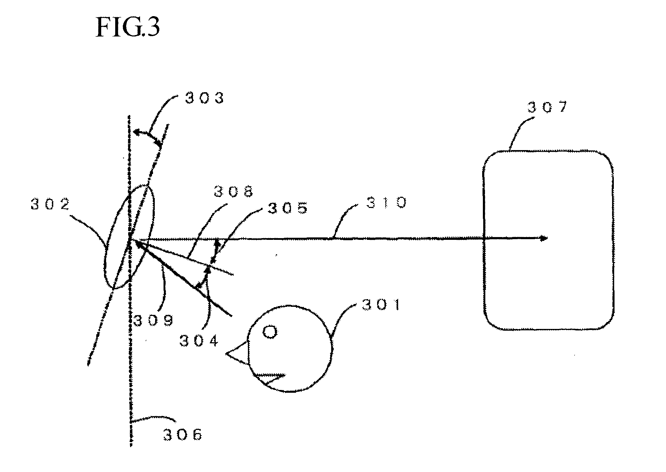

Here, a detecting method for detecting the position of the head of the speaker in the vehicle in order to make the delay τ suitable value is explained. In this explanation, a case where the position detector 202 detects the setup angle of the back mirror provided in the vehicle is considered. Fig. 3 is a figure showing a principle of the position detector 202 to detect the position of the head of the speaker based on the setup angle of the back mirror provided in the vehicle.

The back mirror 302 is a back mirror by which the occupant in a driver seat confirms the rear of the vehicle in visual contact via a rear glass 307. When the occupant in the driver seat confirms the rear of the vehicle in visual contact via rear glass 307 by the back mirror 302, according to the principle of light reflection, an angle 304 between a perpendicular 308 of the surface defined by the back mirror 302 and a line of sight 309 of the occupant in the driver seat for the back mirror 302 is same as an angle 305 between the perpendicular 308 of the surface defined by the back mirror 302 and a line 310 extending from the back mirror to a vicinity of a center of a rear glass. In this case, a setup angle 303 of the back mirror 302 which is, for example, determined with reference to the perpendicular 306 of the ground on which the vehicle stands is uniquely determined. Therefore, the position of the occupant in the driver seat in the vehicle is detected from the setup angle of the back mirror by back calculation.

The suitable delay τ for directing the directivity of the microphone device 201 to the head of the occupant in the driver seat as a speaker can be obtained based on the angle θ (same as afore described directivity direction θ) between the position of the head of the occupant in the driver seat obtained from the information of the setup angle 303 by back calculation and the microphone array formed from the sound pickup elements 203 and 204, the distance d between the sound pickup element 203 and the sound pickup element 204, and the mathematical relationship (1).

According to such a microphone device 201, it is possible to provide such a facility to direct the directivity toward the occupant by setting the back mirror in a suitable angle without adjustively changing the direction of the microphone after each positional change of the head of the occupant in the vehicle due to, for example, differences in a physical frame.

Additionally, the directivity direction θ of the microphone device 201 is not only directed to the occupant in the driver seat but also to the occupant in the passenger seat. Also, the directivity direction may be directed to the backseat. In other words, each occupant in the driver seat, in the passenger seta, and in the backseat may be a speaker of the predetermined occupant in the vehicle.

Although the present invention is explained in detail with reference to a specific embodiment, it is obvious for a person having ordinary skills in the art to add various changes and modification without departing from the spirit and the scope of the present invention.

The present invention claims priority from Japanese patent application No.2008-164297 filed on June 24, 2008 and the subject matters of which are incorporated herein by reference.

## Industrial Applicability

The present invention is useful for a microphone device in which the directivity of the microphone is automatically adjustable depending on the position of the head of the speaker, or the like.

Reference Sign List

101 Microphone Assembly
102 Rotative Board
103 Directive Microphone
104 Directivity Direction (Arrow)
201 Microphone Device
202 Position Detector
203 Sound Pickup Element
204 Sound Pickup Element
205 Signal Processing Unit
206 Microphone Amplifier
207 Microphone Amplifier
208 Delay Unit
209 Arithmetic Unit
210 Output Unit
301 Occupant in Driver Seat
302 Back Mirror
303 Setup Angle
304 Angle
305 Angle
306 Perpendicular of the Ground on which the Vehicle stands
307 Rear Glass
308 Perpendicular of the Surface defined by the Back Mirror
309 Line of Sight
310 Line extending from the Back Mirror to a vicinity of the Center of the Rear Glass

## Claims

1.  A microphone device mounted on a vehicle, comprising:

    a plurality of sound pickup units which generate an input signal depending on changes in an acoustic pressure caused by a sound wave;
    a position detecting unit which detects a position of a head of a predetermined occupant in the vehicle; and
    an arithmetic processing unit which performs a predetermined directive arithmetic process for the input signal based on the position of the head detected by the position detecting unit and positions of the sound pickup units.

2.  The microphone device according to claim 1, wherein the arithmetic processing unit further includes:

    a signal delaying unit which determines a delay based on the position of the head detected by the position detecting unit and the positions of the plurality of sound pickup units and delays a first input signal generated from the first sound pickup unit by the delay; and
    an arithmetic unit which performs a predetermined add-subtract process for a delayed first signal by the signal delaying unit and a second input signal generated from the second sound pickup unit other than the first sound pickup unit.

3.  The microphone device according to claim 1 or 2, wherein the position detecting unit detects the position of the head based on a setup angle of a back mirror provided on the vehicle.

4.  The microphone device according to claim 1 or 2, wherein the position detecting unit detects the position of the head based on a setup position of a seat provided in the vehicle.

5.  The microphone device according to claim 1 or 2, wherein the position detecting unit detects the position of the head based on a shot image which is shot by an imaging unit provided in the vehicle.

6.  The microphone device according to claim 1 or 2, wherein the position detecting unit detects the position of the head at least two of a setup angle of a back mirror which is provided in the vehicle, a setup position of a seat which is provided in the vehicle, and a shot image which is shot by an imaging unit provided in the vehicle.

7.  The microphone device according to any one of claims 1-6, wherein the sound pickup unit is a directive microphone.

8.  The microphone device according to any one of claims 1-7, wherein the sound pickup unit is a MEMS microphone.

9.  The microphone device according to any one of claims 1-8, wherein the predetermine occupant includes an occupant in a driver seat and an occupant in a passenger seat.

**Amended claims under Art. 19.1 PCT**

1.  (Amended) A microphone device mounted on a vehicle, comprising:

    a plurality of sound pickup units which generate an input signal depending on changes in an acoustic pressure caused by a sound wave;
a position detecting unit which detects a position of a head of a predetermined occupant in the vehicle; and
an arithmetic processing unit which performs a predetermined directive arithmetic process for the input signal based on the position of the head detected by the position detecting unit and positions of the sound pickup units,
wherein the position detecting unit detects the position of the head based on a setup angle of a back mirror provided on the vehicle.

2. (Original) The microphone device according to claim 1, wherein the arithmetic processing unit further includes:

　　a signal delaying unit which determines a delay based on the position of the head detected by the position detecting unit and the positions of the plurality of sound pickup units and delays a first input signal generated from the first sound pickup unit by the delay; and
　　an arithmetic unit which performs a predetermined add-subtract process for a delayed first signal by the signal delaying unit and a second input signal generated from the second sound pickup unit other than the first sound pickup unit.

3. (Amended) The microphone device according to claim 1 or 2, wherein the position detecting unit detects the position of the head based on a setup position of a seat provided in the vehicle.

4. (Amended) The microphone device according to claim 1 or 2, wherein the position detecting unit detects the position of the head based on a shot image which is shot by an imaging unit provided in the vehicle.

5. (Amended) The microphone device according to any one of claims 1-4, wherein the sound pickup unit is a directive microphone.

6. (Amended) The microphone device according to any one of claims 1-5, wherein the sound pickup unit is a M EM S microphone.

7. (Amended) The microphone device according to any one of claims 1-6, wherein the predetermine occupant includes an occupant in a driver seat and an occupant in a passenger seat.

8. (Canceled)

9. (Canceled)

FIG.1

101

104

103

102

FIG.2

201

202

207

208

205

M1

203

τ1

206

M2

204

209

210

FIG.3

## INTERNATIONAL SEARCH REPORT

| | International application No. |
|---|---|
| | PCT/JP2009/002900 |

A. CLASSIFICATION OF SUBJECT MATTER
*H04R1/40*(2006.01)i, *B60R1/04*(2006.01)i, *B60R11/02*(2006.01)i, *B60R11/04*
(2006.01)i, *H04R3/00*(2006.01)i

According to International Patent Classification (IPC) or to both national classification and IPC

B. FIELDS SEARCHED

Minimum documentation searched (classification system followed by classification symbols)
H04R1/40, B60R1/04, B60R11/02, B60R11/04, H04R3/00

Documentation searched other than minimum documentation to the extent that such documents are included in the fields searched
Jitsuyo Shinan Koho          1922-1996   Jitsuyo Shinan Toroku Koho  1996-2009
Kokai Jitsuyo Shinan Koho    1971-2009   Toroku Jitsuyo Shinan Koho  1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 10-126876 A  (Matsushita Electric Industrial Co., Ltd.),<br>15 May, 1998 (15.05.98),<br>Par. Nos. [0021] to [0024]; Figs. 1, 4<br>(Family: none) | 1-2,4-9<br>3 |
| Y | JP 11-18194 A  (Fujitsu Ltd.),<br>22 January, 1999 (22.01.99),<br>Par. Nos. [0009] to [0012], [0086] to [0089];<br>Figs. 19, 22<br>& US 6317501 B1          & US 2002/0041693 A1<br>& US 2002/0080980 A1     & US 2002/0106092 A1 | 1-2,4-9 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>23 July, 2009 (23.07.09) | Date of mailing of the international search report<br>04 August, 2009 (04.08.09) |
|---|---|
| Name and mailing address of the ISA/<br>Japanese Patent Office | Authorized officer |
| Facsimile No. | Telephone No. |

Form PCT/ISA/210 (second sheet) (April 2007)

9

**INTERNATIONAL SEARCH REPORT**

International application No.

PCT/JP2009/002900

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-137538 A (Kojima Press Industry Co., Ltd.), 19 June, 2008 (19.06.08), Claim 1; Fig. 1 (Family: none) | 4 |
| Y | JP 2006-186646 A (Kyocera Corp.), 13 July, 2006 (13.07.06), Par. Nos. [0020] to [0063]; Figs. 1 to 10 (Family: none) | 5 |
| A | JP 2005-354223 A (Toshiba Corp.), 22 December, 2005 (22.12.05), Par. Nos. [0031], [0037] to [0038]; Figs. 1 to 2 (Family: none) | 9 |
| A | JP 2005-536113 A (Shure Acquisition Holdings, Inc.), 24 November, 2005 (24.11.05), Full text; all drawings & US 2004/0037168 A1 & EP 1552719 A & WO 2004/016038 A1 & CN 1689371 A | 3 |

Form PCT/ISA/210 (continuation of second sheet) (April 2007)

**EP 2 291 001 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007168686 A

- JP 2008164297 A